# EUROPEAN PATENT APPLICATION

(11) **EP 2 363 285 A1**
(43) Date of publication of application: **07.09.2011**
(21) Application number: 11380011.4
(22) Date of filing: 24.02.2011
(51) Int. Cl.: B32B 17/10, C03C 27/12, B64C 1/14, F41H 5/04, B61D 25/00

(54) **Glazing of laminated safety glass**

(30) Priority: 25.02.2010 ES 201030264
(71) Applicant: Arino de Frenne, Ana Maria, 50171 La Puebla de Alfinden Zaragoza (ES)
(72) Inventor: Arino de Frenne, Ana Maria, 50171 La Puebla de Alfinden Zaragoza (ES)
(74) Representative: Ungria Lopez, Javier

(57) **Abstract**

Glazing of laminated safety glass, of the type of glazing comprises at least two sheets of glass held together by plastic sheets of polyvinyl butyral or the like, with special application for its low weight and high strength in urban transport vehicles and rail, which is constituted by an outer sheet (2) of tempered glass with a thickness comprised between 1.5 and 4 mm; a first transparent aliphatic polyurethane sheet (3); a polycarbonate layer (4); a second sheet of transparent aliphatic polyurethane (5), and, one inner sheet (6) of tempered glass, obtaining a glazing (1) with a resistance to penetration by projectiles higher than 290 J, a bending strength higher than 150 MPa, and a surface weight between 9 and 20 kg/m², and can be mounted on a structure of double glazing with air chamber to improve the characteristics of thermal, acoustic and solar insulation.

## Description

### OBJECT OF THE INVENTION

The following invention, as expressed in the statement of the present specification, refers to a glazing of laminated safety glass, being the type of glazing that comprises at least two sheets of glass held together by plastic sheets of polyvinyl butyral or similar, whose essential purpose is to provide a great security against impact and penetration with a minimum specific weight, that is, obtaining a glazing with adequate strength and a small weight.

The glazing comprises of at least a thin layer of transparent polycarbonate assembled through respective transparent aliphatic polyurethane sheets, between two sheets of glass with small thickness.

In turn, this assembly can be mounted on a structure of double glazing with internal air chamber to improve the characteristics of thermal, acoustic and solar insulation.

### FIELD OF APPLICATION

The glazing of laminated safety glass object of the invention is applicable in many different industries and thus has especial application in the glazing of urban transport vehicles (trams, buses, metro, etc.), and rail (commuter trains, medium and long-distance and high speed trains).

Likewise, the glazing of laminated safety glass is applied in construction, being able to be used as an enclosing element of frontages and windows.

### BACKGROUND OF THE INVENTION

Laminated safety glass is now widely used in both architectural and automotive field. Normally these products are composed of two or more glasses joined together by plastic sheets of polyvinyl butyral (PVB), ethyl-vinyl acetate (EVA) or similar materials. The plastic sheets that attach the glasses must have a sufficient grip to prevent the detachment of glass in case of impact and breakage of the glazing.

When you need a higher level of safety, such as it may be the case of bullet proof glazing, laminated glass with a relatively high thickness (the individual thickness of the glasses constituting the glazing is greater than or equal to 4 mm) is used. In these bullet proof glazing usually polycarbonate plates thicker than 3 mm are incorporated.

The polycarbonate plate is placed as outer layer of the glazing in order to avoid the projection of shrapnel in the case of an attack with guns.

This configuration has the disadvantage of exposing the polycarbonate plate to external agents, the polycarbonate material being relatively soft and susceptible to being easily scratched.

In the case of anti theft glazing applications thick polycarbonate plates with a thickness equal to or higher than 4 mm are also used inserted between two glasses and bonded together by means of sheets of polyurethane, so that the minimum thickness is 12 mm.

The characteristic of these anti theft glazing is that due to the level of attack that both the glasses and the polycarbonate used must withstand they have a relatively high thickness (equal to or higher than 4 mm), resulting in laminated glass configurations with a great surface weight, typically greater than 45 kg/m².

On the other hand, several processes are used to increase the mechanical strength of the glass. The most common are tempering treatments either via thermal or chemical. Thanks to these processes it is achieved that the glass reaches values of bending strength higher than 150 MPa.

We can also consider document WO 2008/082834 wherein a glazed plastic useful for automobiles is described, which includes a polycarbonate substrate, a conductive layer adjacent to the polycarbonate substrate and a glazed layer located adjacent to the conductive layer. The conductive layer comprises carbon nanotubes and the glazed layer is made of a material that is different from polycarbonate. The glazed layer includes at least one abrasion resistant layer and an erosion resistant layer.

### DESCRIPTION OF THE INVENTION

In the present specification a glazing of laminated safety glass is described, being the type of glazing that comprises of at least two sheets of glass held together by plastic sheets of polyvinyl butyral or the like, so that the glazing comprises:
- an outer sheet of thermally or chemically tempered glass with a thickness comprised between 1.5 and 4 mm;
- a first sheet of transparent aliphatic polyurethane;
- a polycarbonate layer with a thickness comprised between 0.5 and 1.5 mm;
- a second sheet of transparent aliphatic polyurethane,
   and;
- an inner sheet of thermally or chemically tempered glass with a thickness comprised between 1.5 and 4 mm,
having a glazing with a resistance to penetration by projectiles higher than 290 joules, a bending strength higher than 150 MPa (106 Pascals) and a surface weight between 9 and 20 kg/m².

In a practical implementation of the invention, the glazing consists exactly of:
- an outer sheet of thermal tempered glass with a thickness of 3.0 to 3.2 mm;
- a first sheet of transparent aliphatic polyurethane;
- a polycarbonate layer with a thickness of 0.5 mm;
- a second sheet of transparent aliphatic polyurethane, and;
- an inner sheet of chemically tempered glass with a thickness of 2 mm
obtaining a glazing with a surface weight of 15 kg/m², able to withstand, without penetration, an impact with energy of 290 Joules.

In this way, a glazing with a minimum weight with a high resistance to penetration is obtained, which becomes very important in the automotive and, in particular, the rail industry.

At least one of the glass sheets or plastic sheets of the glazing can incorporate solar radiation absorbents in its mass, thereby improving the performance of solar and light control.

Likewise, the glazing of laminated glass can form the outer glazing of a double glazing with air chamber, improving thermal and acoustic insulation.

Furthermore, in one of the surfaces of the internal glazing of a double glazing with air chamber thin layer structures for solar control and/or low emissivity can be applied.

To complement the description that will be carried out in the following, and with the object of helping to a better understanding of the characteristics of the invention, is attached to the present specification, a set of drawings whose figures, in an illustrative and not limiting way, represent the most characteristic details of the invention.

### BRIEF DESCRIPTION OF THE DRAWINGS

Figure 1. Shows a sectional view of the glazing object of the invention, being able to observe the outer and inner sheet of glass, as well as the two sheets of aliphatic polyurethane and the polycarbonate central layer.
Figure 2. Shows a sectional view of a glazing assembly object of the invention in a double glazing with air chamber for thermal, acoustic and solar insulation.
Figure 3. Shows a sectional view of a glazing assembly object of the invention in a double glazing with air chamber showing the outer glazing a greater length for bonding.

### DESCRIPTION OF A PREFERRED EMBODIMENT

In view of the mentioned figures and according to the numbering adopted it can be seen how the glazing of safety laminated glass 1 comprises an outer sheet 2 of thermally or chemically tempered glass with a thickness comprised between 1.5 mm and 4 mm, a first sheet of transparent aliphatic polyurethane 3, a polycarbonate layer 4 with a thickness comprised between 0.5 mm and 1.5 mm, a second sheet of transparent aliphatic polyurethane 5 and an interior sheet 6 of thermally or chemically tempered glass with a thickness comprised between 1.5 mm and 4 mm.

In a practical implementation of the invention, the glazing 1 consists exactly of an outer sheet 2 of thermal tempered glass with a thickness of 3.0 to 3.2 mm, a first sheet of transparent aliphatic polyurethane 3, a polycarbonate layer 4 with a thickness of 0.5 mm, a second sheet of transparent aliphatic polyurethane 5, and an inner sheet 6 of chemically tempered glass with a thickness of 2 mm, such that a glazing with a surface weight of 15 kg/m² is obtained, able to withstand, without penetration, an impact with an energy of 290 Joules.

In this way, a glazing of a minimum weight with a high resistance to penetration is obtained, which becomes very important in the automotive and, in particular, the rail industry.

The sheets of aliphatic polyurethane have a mission of attaching the glass and polycarbonate plates permanently, generally using polyurethane sheets with a thickness comprised between 0.38 mm and 1.25 mm.

The main feature of the glazing 1 of laminated safety glass object of the invention comprises incorporating a layer of polycarbonate 4 with a small thickness which significantly increases the resistance to penetration of the assembly.

Thus, the glazing of laminated glass 1 developed is able to withstand, without penetration, the impact of a steel projectile of 10 Kg dropped from a height greater than 3 m high, which implies an impact energy higher than 290 J (joules).

Therefore, the novel addition of a very thin polycarbonate layer 4, of the order of 0.5 mm, provides great resistance to penetration without penalizing the specific surface weight of the glazing.

Also, the glazing of laminated glass 1 with high safety against impact, presents unalterable characteristics with a very wide range of operating temperatures, and its specific surface weight being very light since it is comprised between 9 and 20 kg/m².

Likewise, the described glazing 1 also provides a great mechanical strength through the use of the outer and inner sheet of thermally or chemically tempered glass.

This reinforcement is essential to meet the requirements of resistance to the pressure waves caused at the railroad crossing.

Another advantage obtained by the glazing of laminated safety glass of the present invention is that the polycarbonate layer is encapsulated by using two sheets of transparent aliphatic polyurethane 3 and 5 between two sheets of glass so that it is permanently protected from the abrasion that would cause a scratch on the surface of polycarbonate.

Also, for obtaining the best performance of solar and light control is possible to use sheets of glass or sheets of aliphatic polyurethane having solar radiation absorbents in its mass.

The glazing of laminated glass may incorporate treatments of thin metal layers on one surface of the glass sheets, so that these thin layers act as light and solar control.

According to a particular embodiment a thin stainless steel metal layer with a thickness comprised between 5 nm and 30 nm (nanometers) is applied, which allows the graduation of the light transmission between 50 and 5%. This thin metal layer can be protected by a harder layer, such as, for example, titanium nitride.

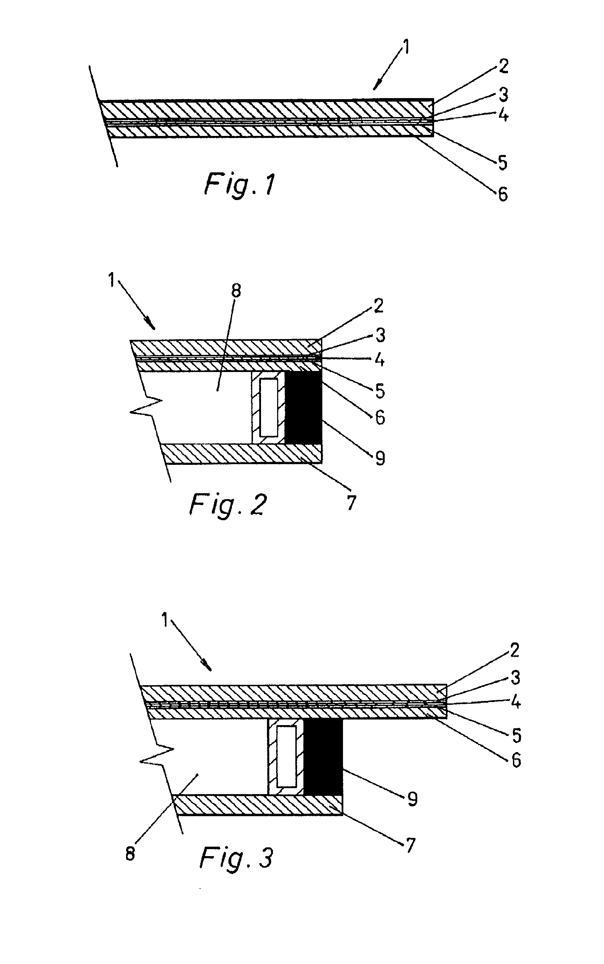

The glazing of laminated safety glass and low weight described can be assembled in double insulating glazing units, in order to improve thermal insulation performance. Thus, in Figure 2 of the drawings an embodiment is described, wherein one side of the double glazing is defined by the glazing object of the invention and the other side is defined by a thermal tempered glass 7, creating between both sides an air chamber 8 by a metal or thermoplastic profile, sealed using butyl or isobutylene cords 9, and external silicone, polysulphide or polyurethane sealants. This air chamber can have thicknesses comprised between 6 and 16 mm.

Also, in one surface of the inner face of the double glazing defined by a thermal tempered glass 7 is possible to include thin metal layers of low emissivity and/or to replace the air in the chamber 8 by a lower thermal conductivity gas such as argon or krypton, thereby achieving improving the thermal insulation of the window.

To install this glazing in a window or directly on the vehicle body one of the glass faces may include a ceramic painting perimeter band, on this zone a bonding of the glazing to the window or body can be carried out by using adhesive polymers, of the type of polyurethane, silicone, etc. Also in the case of insulating glass with air chamber is possible to use a design in which the outer glass has a larger size than the inner one, as described in Figure 3, therefore the bonding is performed over the two glasses forming the double glazing, ensuring a greater bonding surface.

In short, the glazing of high safety and low weight laminated glass object of the invention is applicable in many different industries and thus is especially relevant in the glazing of urban transport vehicles (trams, buses, metro, etc. ) and rail (commuter trains, middle and long distance and high speed trains) that require a high resistance to penetration by possible external impacts of objects, either by deliberate release of projectiles or by accidental impact (stones, metal objects, etc).

Also, the resulting glazing has a great mechanical strength against other requests such as wind load or the over-pressure generated in the railroad crossing and at the entrance of these tunnels at high speed.

Laminated glass can likewise incorporate solar control treatments. One possibility is the use of compounds absorbing solar radiation in the mass of the intermediate sheets of polycarbonate and/or polyurethane.

Also, the possibility of applying structures of thin layers in one of the inner surfaces of the glazing is envisaged, these thin layers act as sun protection and attenuation of light transmission.

## Claims

1. GLAZING OF LAMINATED SAFETY GLASS, being the type of glazing that comprises of, at least, two sheets of glass held together by plastic sheets of polyvinyl butyral or the like, with special application to urban transport vehicles and rail, **characterized in that** the glazing (1) comprises:
• an outer sheet (2) of thermally or chemically tempered glass with a thickness comprised between 1.5 and 4 mm;
• a first sheet of transparent aliphatic polyurethane (3);
• a polycarbonate layer (4) with a thickness comprised between 0.5 and 1.5 mm;
• a second sheet of transparent aliphatic polyurethane (5), and;
• an inner sheet (6) of thermally or chemically tempered glass with a thickness comprised between 1.5 and 4 mm,
obtaining a glazing (1) with a resistance to penetration by projectiles higher than 290 joules, a bending strength higher than 150 MPa (106 Pascals) and a surface weight between 9 and 20 kg/m².

2. GLAZING OF LAMINATED SAFETY GLASS, according to claim 1, **characterized in that** the glazing (1) consists exactly of:
• an outer sheet (2) of thermal tempered glass with a thickness of 3.0 to 3.2 mm;
• a first sheet of transparent aliphatic polyurethane (3);
• a polycarbonate layer (4) with a thickness of 0.5 mm;
• a second sheet of transparent aliphatic polyurethane (5), and;
• an inner sheet (6) of chemically tempered glass with a thickness of 2 mm,
obtaining a glazing with a surface weight of 15 kg/m², able to withstand, without penetration, an impact with energy of 290 Joules.

3. GLAZING OF LAMINATED SAFETY GLASS, according to claim 1 or 2, **characterized in that**, at least one of the glass sheets (2-6) incorporates solar radiation absorbents in its mass.

4. GLAZING OF LAMINATED SAFETY GLASS, according to claim 1 or 2, **characterized in that** the glazing of laminated glass (1) forms the outer face of a double glazing with air chamber (8).

5. GLAZING OF LAMINATED SAFETY GLASS, according to claims 1 or 2 and 4, **characterized in that** on one surface of the inner side of a double glazing with air chamber (8) structures of thin layers of solar control and/or low emissivity are applied.
